# EUROPEAN PATENT SPECIFICATION

(11) **EP 1 350 430 B1**
(45) Date of publication and mention of the grant of the patent: **15.08.2007**
(21) Application number: 03007560.0
(22) Date of filing: 01.04.2003
(51) Int. Cl.: A01M 23/04, A01M 23/00

(54) **Trap for vermin**
Falle für Ungeziefer
Piège à vermine

(30) Priority: 01.04.2002 US 113986
(43) Date of publication of application: 08.10.2003
(73) Proprietor: Cristofori, Gilberto, 40125 Bologna (BO) (IT); Gianchecchi, Ugo, 56021 Cascina (PI) (IT)
(72) Inventor: Cristofori, Gilberto, 40125 Bologna (BO) (IT); Gianchecchi, Ugo, 56021 Cascina (PI) (IT)
(74) Representative: Celestino, Marco

(56) References cited:
- EP-A- 1 059 031
- GB-A- 2 293 956
- US-A- 5 184 416

## Description

### Field of the invention

The present invention relates to the field of disinfesting and more precisely it relates to a trap for vermin with means for signalling the presence of preys therein.

### Background of the invention

Many systems are known for the elimination of small rodents, such as for example mice, which are based on baited traps. Box shaped traps, in particular, have the advantage that they can capture many vermin at the same time and are hygienic, since such vermin are substantially insulated from the outside.

A problem that limits the application of such box shaped traps is that they have to be located in not much accessible places and must also be controlled frequently to check the presence of possible rodents captured.

EP1059031, in the name of the same applicants, discloses a trap with means for signalling the presence of captured preys, such as for example small rodents and mice, that is practical and not expensive to use, and that allows an easy and quick monitoring of one or several traps at the same time.

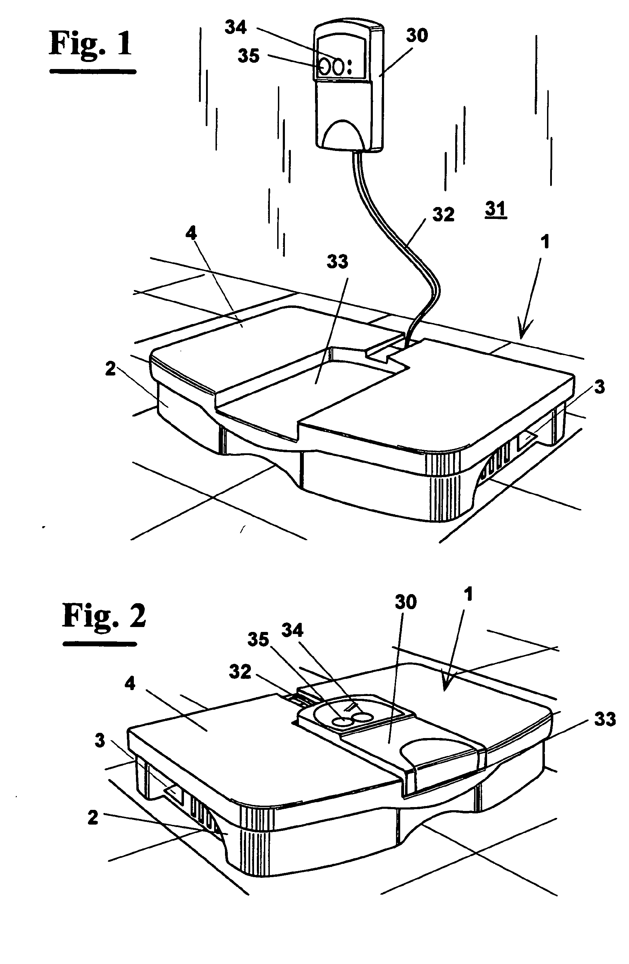

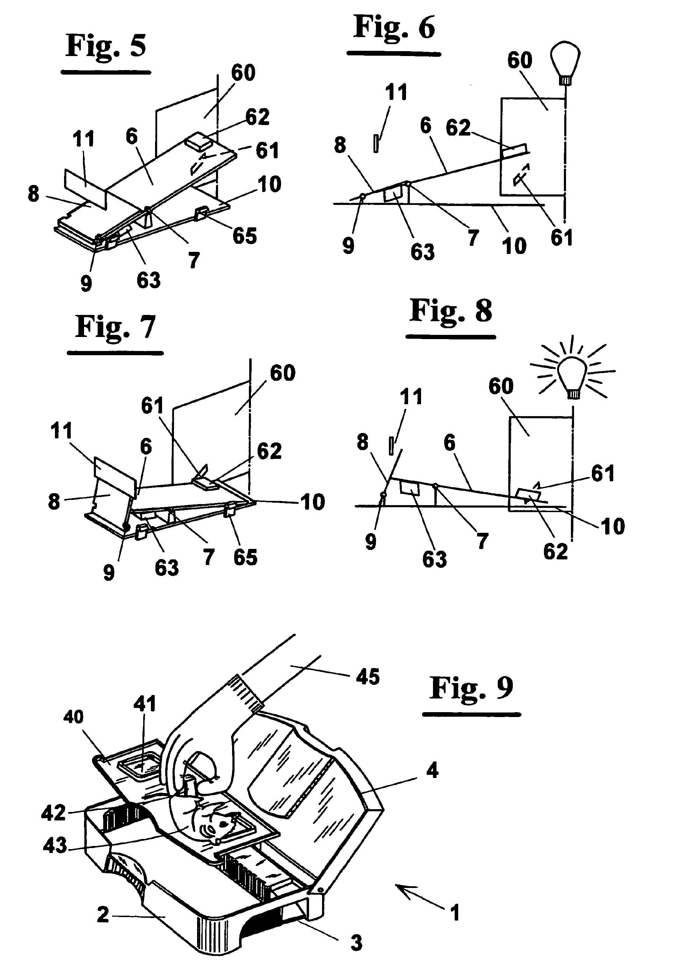

As shown in figures 6A and 6B and 2 of EP1059031 (figures 1 and 2 attached), trap 1 comprises a box-shaped body 2, two inlet ports 3, and a cover 4 hinged to the body. The means for signalling are compact and easily removable comprising a signalling unit 30 that can be fixed to a wall 31 of a building. A cable 32 connects the signalling unit 30 to trap 1 where a sensor of presence or switch is located. A cover 3 comprises a housing 33 in which the signalling unit may be accommodated (fig. 6B) to transport the trap or to use trap 1 compact with the signalling unit 30.

This way, when the trap is used in a hidden place, i.e. under a piece of furniture, the signalling unit 30 is fixed like in fig. 6A, whereas when trap 1 is used in an open space, signalling unit 30 is accommodated in housing 33 like in fig. 2 and separated only when necessary.

A problem to be solved with the cited prior art trap is to arrange in the box both a detecting apparatus and a space to accommodate the mice. It is most important that the detecting apparatus is not damaged by the mice.

Another problem is to remove the mice after that they have been captured, without contact with the mice. Since no poison is used with this kind of traps, the mice could escape or bite the operator.

A further problem is to clean the trap after that the mice have been present. In the trap, in this condition, there are droppings, dirt and the bait left over. For reasons of hygiene it is important that the trap is always clean.

Still another problem is to secure the trap to avoid that it can be crashed by people walking on it or by falling objects, or that it can be moved from the desired place, or stolen.

Furthermore, the ports of the trap should be easily inspected and cleaned.

### Summary of the invention

It is an object of the present invention to provide an improved trap having an apparatus for detecting the presence of mice that is not damaged by the mice same trapped therein.

It is another object of the invention to provide an improved trap from where the mice can be removed easily after being captured.

It is a further object of the invention to provide an improved trap that can be easily cleaned after that the mice have been removed.

It is still another object of the invention to provide an improved trap that can be safely secured so that it cannot be easily crashed or stolen.

Another object of the invention is to provide an improved trap that has ports that can be easily inspected and cleaned.

These and other objects are achieved by a trap according to the invention, comprising
- a box shaped body with a housing for the vermin;
- at least an inlet port in said body for entering said housing;
- means for automatic detection of the presence of said vermin in said housing;
- means for automatic signalling the presence of said vermin in the housing responsive to said means for automatic detection;
- a wall for separating said means for automatic detection and said housing.

Preferably, said or each port comprises a tilting plate and said means for automatic detection comprise at least a proximity sensor mounted on an electronic board, at least a magnetic element being provided on said tilting plate activating said proximity sensor through said wall.

The inlet port may have alternatively a pivotable door, said door being capable of rotating from an open to a closed position operated by said vermin when entering the trap, said means for automatic detection comprising at least a proximity sensor mounted on an electronic board, at least a magnetic element being provided on said door activating said proximity sensor through said wall.

The means for signalling can be arranged in a satellite device that can be detached from said body and connected to said body by means of a signals transmission cable, a protection coil being provided about said cable.

The tilting plate or door may have a counterweight that allows the back stroke to a starting position.

The tilting plate or door is associated to a fastening support equipped with means for snap engagement to said body.

The housing has preferably a bottom wall on which a tray is arranged with bait receiving recesses and means for grasping the tray.

Advantageously, a cantilever sheet is provided for protection from hits that can be fixed to a wall next to said box shaped body.

A metal cable portion protruding from the base and having antitheft function may be provided for connecting said trap to a wall.

The box shaped body may have a plurality of openings for passage of air, a box being provided with a cover and means for supplying gas, in particular CO², whereby when the trap is in the box the gas fills the box and penetrates the trap through said openings.

### Brief description of the drawings

The invention will be made clearer with the following description of an embodiment thereof, exemplifying but not limitative, with reference to attached drawings wherein:
- figures 1 and 2 show a perspective view of a trap of known art, with the unit for signalling separable from the body of the trap;
- figure 3 shows a perspective view of a trap according to the invention with the cover open, for viewing an improved embodiment of the elements within the trap of figure 1;
- figure 4 shows a perspective view of the trap with an electronic board having proximity sensors and a tiltable plate that can be easily unfastened;
- figures from the 5 to the 8 show a preferred embodiment of the tiltable means of figure 3 and of the relative signalling system;
- figure 9 shows a perspective view of the removal step of the tray of which the trap is equipped;
- figure 10 shows a perspective view of the trap of figures 1 and 2 with a metal sheltering;
- figure 11 shows a rear perspective view of the trap of figures 1 having an antitheft cable according to an embodiment of the invention;
- figures 12 and 13 show a perspective view of of an elimination device of vermin present in the trap;
- figure 14 shows a perspective view of a protection coil for an electrical cable of the trap according to the invention;
- figure 15 shows a perspective view of an alternative embodiment of the trap according to the invention;
- figures 16 and 17 show a diagrammatic view of the operation of the trap of figure 15.

### Description of a preferred embodiment

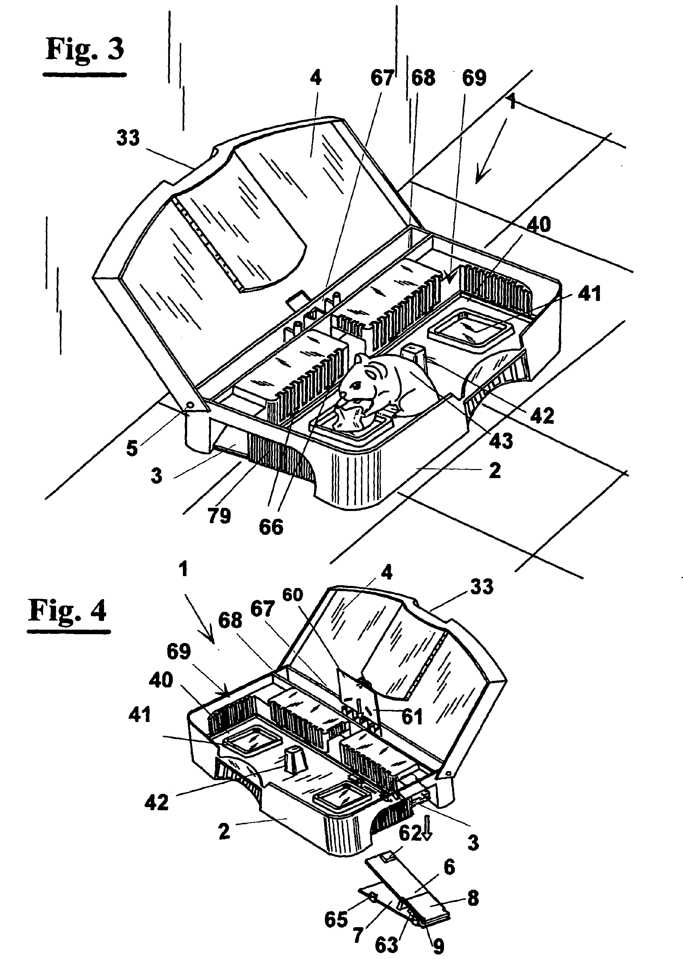

With reference to figures 3 and 4, a trap 1 according to the invention comprises a box-shaped body 2, two inlet ports 3, and a cover 4 hinged to the end on two pins 5 of which only one is shown.

The inlet port 3is equipped with a one way mechanism, seen in figures. 5 to 8, having a tilting platform 6 hinged on a central pin 7 integral to a support 10, a tilting wing 8 hinged on a side pin 9 of support 10, and an abutment 11. An animal that enters the trap, once passed the central pin 7, causes the rotation of platform 6, raising wing 8 up to touching abutment 11. The animal, then, causes the platform 6 to rotate completely, which returns back to the starting position owing to the weight of the wing after that the animal has passed. Engagement means 65 may be provided that snap fit support 10 of tiltable means 6 and 8 to the base of trap 1, that has holes 66. Always according to this embodiment, on the upper surface of the tilting wing 6 a magnet is connected 62 whose position is detected by a proximity sensor 61 mounted on electronic board 60. When the tilting wing 6 rotates about hinge 7, under the weight of an animal that walks on it, magnet 62 runs near sensor 61 of electronic board 60, that is electrically connected to the means for signalling 30. The back stroke of the wing 6 in the starting position is made by a counterweight 63 connected to its lower surface.

As shown in figures 3 and 4, electronic board 60 is arranged in a slot 67, separated by a wall 68 from the housing 69 where the inlet ports are arranged and where the mice can be present.

With reference to figures 3, 4 and 9, trap 1 can be provided of a tray 40 having two bait receiving recesses 41 and a grasping protrusion 42. Tray 40 is arranged in housing 69 on the base of body 2. This solution makes the removal of the captured animal easier by an operator 45 (figure 9), and is effective also for cleaning rapidly the trap. The tray can be either of disposable type, for example blister, or can be washed and used again.

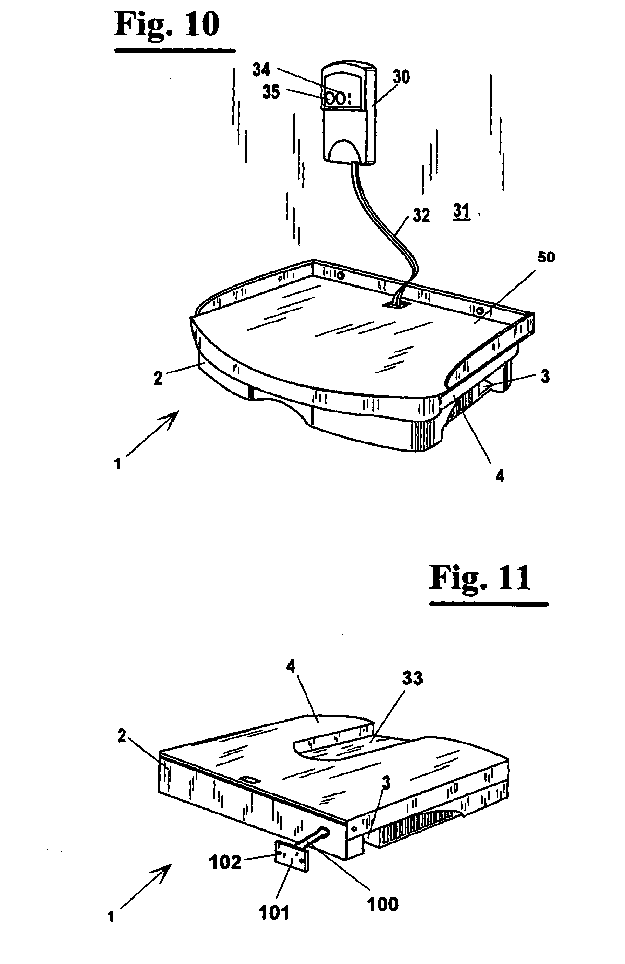

With reference to figure 10, trap 1 can be associated to a metal shelter 50, for protecting it from possible hits, for example people walking or objects falling.

In figure 11 a cable is shown as antitheft means of trap 1, comprising a metal cable portion 100 protruding from trap 1 and that can be fastened to a wall by means of a fastening plate 101 with holes 102.

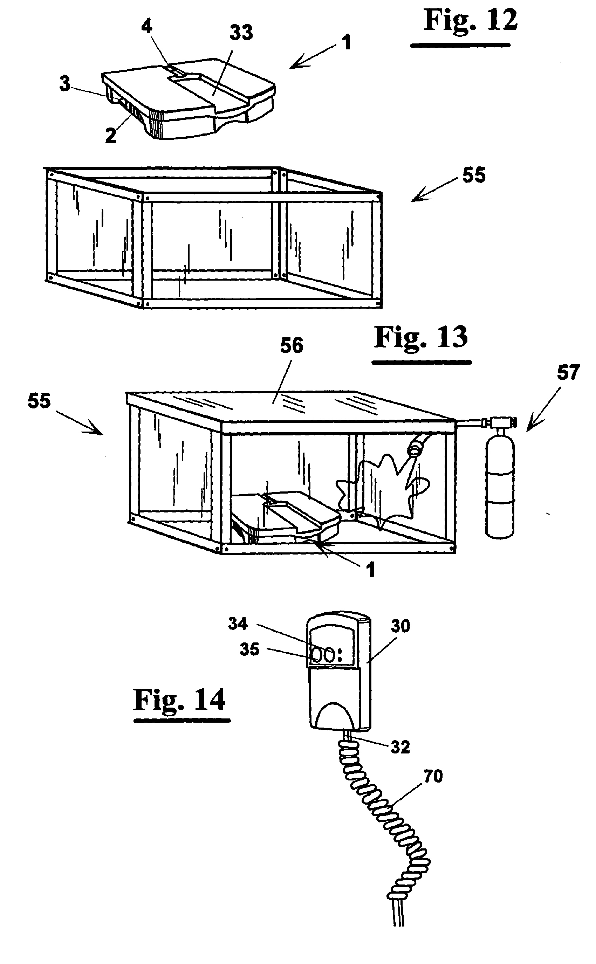

The disposal of the animal, or animals, from trap 1 according to the invention is, for safety reasons, preferably carried out after its or their passing away. This can be made (figure 12 and 13) by preliminarily introducing trap 1 in a box 55 provided with a cover 57 and supplying gas, for example CO₂. The gas fills the box 55 and penetrates trap 1 through the openings 79 of body 2. The CO₂ concentration increases in box 55 up to achieving a lethal value for the animal.

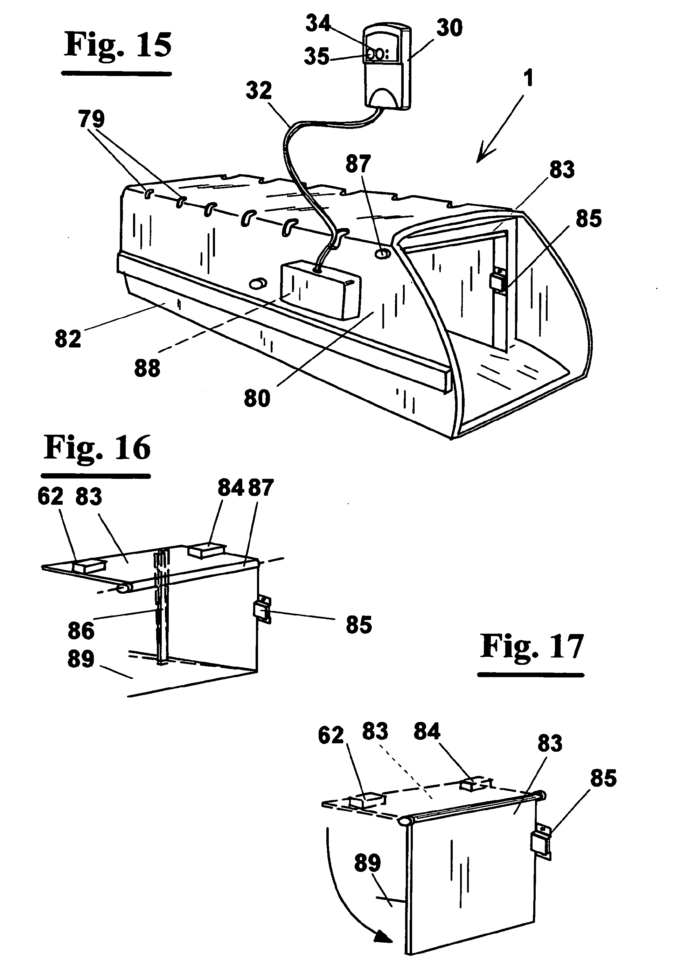

Another particular aspect of the invention is shown in figure 16 and provides a coil protection 70 for electrical cable 32, against bites from the animals.

Finally, in figures from 15 to 17 a further alternative solution is shown where a trap 81 has a pivotable door 83 located near the inlet, capable of rotating about a hinge 87. The door is left open, sustained on a support 86 extending from a tiltable floor 89. When the animal walks on central part of tiltable floor 89, support 86 slightly rotates leaving door 83 free to rotate by gravity. Magnetic elements 84 and 85 keep door 83 closed to prevent the animal from escaping. Door 83 has also a magnet 62 that signals, through wall 80, the presence of the animal to a proximity sensor present in an electronic board located in housing 88, similar to sensor 61 of board 60 shown in figures 5-8. The means for signalling 30, connected to the sensor, operate in the same way as above described under the concepts of the present invention.

The means for signalling can comprise both a light alarm sound alarm, arranged either on the trap or on the remote support. In the second case the connection to the system of detection can be carried out with an electric cable, and/or with a receiver of radio or infrared signals, transmitted by a sender connected to the detection devices.

According to a preferred aspect of the invention the signalling systems can communicate the entry of the preys in the trap with a predetermined delay time, so that other vermin that may be present can enter the trap before the intervention of the operator.

The device, according to the present invention allows the monitoring of several traps at the same time providing a signalling system that can comprise a control board for displaying the presence of the preys in one or a plurality of traps.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A trap used for capturing vermin, such as for example small rodents, comprising
- a box shaped body (2) with a housing (69) for said vermin (43);
- at least an inlet port (3) in said body (2) for entering said housing (69);
- means for automatic detection (60) of the presence of said vermin (43) in said housing (69);
- means for automatic signalling (30) the presence of said vermin (43) in the housing responsive to said means for automatic detection (60);
**characterised in that**
a wall (68,80) is provided for separating said means for automatic detection and said housing.

2. Trap according to claim 1, wherein said or each port comprises a tilting plate (6) and said means for automatic detection comprise at least a proximity sensor (61) mounted on an electronic board (60), at least a magnetic element (62) being provided on said tilting plate (6) activating said proximity sensor (61) through said wall (68).

3. Trap according to claim 1, wherein said inlet port has a pivotable door (83), said door being capable of rotating from an open to a closed position operated by said animal when entering the trap (1), said means for automatic detection comprising at least a proximity sensor mounted on an electronic board, at least a magnetic element (62) being provided on said door (83) activating said proximity sensor through said wall (80).

4. Trap according to claim 2 or 3, wherein said means for signalling are arranged in a satellite device (30) that can be detached from said body (2) and connected to said body by means of a signals transmission cable (32), a protection coil (70) being provided about said cable (32).

5. Device according to claim 2 or 3, wherein said tilting plate (6) or door (83) has a counterweight that allows the back stroke to a starting position.

6. Trap according to claim 2 or 3, wherein said tilting plate (6) or door (83) is associated to a fastening support equipped with means (62, 65) for snap engagement to said body (2).

7. Trap according to claim 1, wherein said housing (69) has a bottom wall on which a tray (40) is arranged with bait receiving recesses (41) and means (42) for grasping the tray.

8. Trap according to claim 1, wherein a cantilever sheet (50) is provided for protection from hits that can be fixed to a wall (31) next to said box shaped body (2).

9. Trap according to claim 1, wherein a metal cable portion (100) protruding from the box shaped body (2) and having antitheft function is provided for connecting said trap (1) to a wall (31).

10. Trap according to claim 1, wherein said box shaped body has a plurality of openings (79) for passage of air, a box (55) being provided with a cover (57) and means for supplying gas, in particular CO², whereby when the trap is in the box the gas fills the box (55) and penetrates the trap (1) through said openings.

## Patentansprüche

1. Falle zum Fangen von Schädlingen, beispielsweise kleinen Nagetieren, umfassend
- einen kastenförmigen Aufbau (2) mit einem Gehäuse (69) für das Nagetier (43);
- mindestens eine Eingangsöffnung (3) in dem Körper (2) zum Eintreten in das Gehäuse (69);
- Mittel zur automatischen Erkennung (60) des Vorhandenseins eines Nagetiers (43) in dem Gehäuse (69);
- Mittel zum automatischen Signalisieren (30) des Vorhandenseins des Nagetiers (43) in dem Gehäuse in Reaktion auf das Mittel zur automatischen Erkennung (60);
**dadurch gekennzeichnet, dass**
eine Wand (68, 80) zum Trennen des Mittels zur automatischen Erkennung von dem Gehäuse bereitgestellt ist.

2. Falle nach Anspruch 1, wobei diese oder jede Öffnung eine geneigte Platte (6) aufweist und das Mittel zur automatischen Erkennung mindestens einen Annäherungssensor (61) umfasst, der auf einer elektronischen Platine (60) montiert ist, wobei mindestens ein magnetisches Element (62) auf der geneigten Platte (6) bereitgestellt ist, das den Annäherungssensor (61) durch die Wand (68) aktiviert.

3. Falle nach Anspruch 1, wobei die Eingangsöffnung eine drehbare Tür (83) aufweist, die sich von einer offenen Position in eine geschlossene Position drehen kann und von dem Tier betrieben wird, wenn es die Falle (1) betritt, wobei die Mittel zur automatischen Erkennung umfassend mindestens einen Annäherungssensor, der auf einer elektronischen Platine montiert ist, mindestens ein magnetisches Element (62), das an der Tür (83) bereitgestellt ist und den Annäherungssensor durch die Wand (80) aktiviert.

4. Falle nach Anspruch 2 oder 3, wobei die Mittel zum Signalisieren in einem außen liegenden Gerät (30) angeordnet sind, das von dem Aufbau (2) gelöst werden und mithilfe eines Signalübertragungskabels (32) mit dem Aufbau verbunden werden kann, wobei das Kabel (32) von einer Schutzumwicklung (70) umgeben ist.

5. Vorrichtung nach Anspruch 2 oder 3, wobei die geneigte Platte (6) oder Tür (83) ein Gegengewicht aufweist, das ein Zurückschwenken in die Ausgangsposition ermöglicht.

6. Falle nach Anspruch 2 oder 3, wobei die geneigte Platte (6) oder Tür (83) mit einer Befestigungshalterung verbunden ist, die mit Mitteln (62, 65) zum Einrasten an dem Aufbau (2) versehen ist.

7. Falle nach Anspruch 1, wobei das Gehäuse (69) eine Bodenwand aufweist, auf der eine Ablage (40) angeordnet ist mit Vertiefungen (41) für das Lockmittel und mit Mitteln (42) zum Ergreifen der Ablage.

8. Falle nach Anspruch 1, wobei eine Auslegeplatte (50) zum Schutz vor Stößen bereitgestellt ist, die an einer Wand (31) neben dem kastenförmigen Aufbau (2) befestigt werden kann.

9. Falle nach Anspruch 1, wobei ein Abschnitt eines Metallkabels (100) bereitgestellt ist, der aus dem kastenförmigen Aufbau (2) herausragt und eine Diebstahlschutzfunktion aufweist, so dass die Falle (1) an einer Wand (31) befestigt werden kann.

10. Falle nach Anspruch 1, wobei der kastenförmige Aufbau mehrere Öffnungen (79) zum Einlassen von Luft aufweist, wobei der Kasten über eine Abdeckung (57) verfügt sowie ein Mittel zum Bereitstellen von Gas, insbesondere CO2, wobei der Kasten (55) mit Gas angefüllt wird, wenn sich die Falle in dem Kasten befindet, und das Gas durch die Öffnungen in die Falle (1) eintritt.

## Revendications

1. Piège utilisé pour capturer les vermines, tels que par exemple les petits rongeurs, comprenant :
un corps en forme de boîte (2) avec un boîtier (69) pour ladite vermine (43) ;
au moins un orifice d'entrée (3) dans ledit corps (2) pour entrer dans ledit boîtier (69) ;
des moyens pour la détection automatique (60) de la présence de ladite vermine (43) dans ledit boîtier (69) ;
des moyens pour signaler automatiquement (30) la présence de ladite vermine (43) dans le boîtier sensibles auxdits moyens pour la détection automatique (60);
**caractérisé en ce que**
on prévoit une paroi (68, 80) pour séparer lesdits moyens pour la détection automatique et ledit boîtier.

2. Piège selon la revendication 1, dans lequel ledit orifice ou chaque orifice comprend une plaque inclinée (6) et lesdits moyens de détection automatique comprennent au moins un capteur de proximité (61) monté sur une carte électronique (60), au moins un élément magnétique (62) étant prévu sur ladite plaque inclinée (6) activant ledit capteur de proximité (61) à travers ladite paroi (68).

3. Piège selon la revendication 1, dans lequel ledit orifice d'entrée a une porte pivotante (83), ladite porte étant capable de tourner d'une position ouverte à une position fermée, actionnée par ledit animal lorsqu'il entre dans le piège (1), lesdits moyens pour la détection automatique comprenant au moins un capteur de proximité monté sur une carte électronique, au moins un élément magnétique (62) étant prévu sur ladite porte (83) activant ledit capteur de proximité à travers ladite paroi (80).

4. Piège selon la revendication 2 ou 3, dans lequel lesdits moyens de signalement sont agencés dans un dispositif satellite (30) qui peut être détaché dudit corps (2) et raccordé audit corps au moyen d'un câble de transmission de signaux (32), une bobine de protection (70) étant prévue autour dudit câble (32).

5. Dispositif selon la revendication 2 ou 3, dans lequel ladite plaque inclinée (6) ou porte (83) a un contrepoids qui permet la course de retour jusqu'à une position de départ.

6. Piège selon la revendication 2 ou 3, dans lequel ladite plaque inclinée (6) ou porte (83) est associée à un support de fixation équipé de moyens (62, 65) pour la mise en prise par emboîtement dans ledit corps (2).

7. Piège selon la revendication 1, dans lequel ledit boîtier (69) a une paroi inférieure sur laquelle un plateau (40) est agencé avec des évidements de réception de leurre (41) et des moyens (42) pour saisir le plateau.

8. Piège selon la revendication 1, dans lequel une feuille en porte-à-faux (50) est prévue pour la protection contre les chocs qui peut être fixée sur une paroi (31) à proximité dudit corps en forme de boîte (2).

9. Piège selon la revendication 1, dans lequel une partie de câble métallique (100) faisant saillie à partir du corps en forme de boîte (2) et ayant une fonction antivol est prévue pour raccorder ledit piège (1) à une paroi (31).

10. Piège selon la revendication 1, dans lequel ledit corps en forme de boite a une pluralité d'ouvertures (79) pour le passage de l'air, une boite (55) étant prévue avec un couvercle (57) et des moyens pour alimenter du gaz, en particulier du CO₂, moyennant quoi lorsque le piège est dans la boite, le gaz remplit la boîte (55) et pénètre dans le piège (1) par lesdites ouvertures.
